# EUROPÄISCHE PATENTANMELDUNG

(11) **EP 1 848 194 A2**
(43) Veröffentlichungstag der Anmeldung: **24.10.2007**
(21) Anmeldenummer: 07106381.2
(22) Anmeldetag: 18.04.2007
(51) Int. Cl.: H04N 1/03, F21V 7/00, F21Y 101/02

(54) **Beleuchtungssystem zur zeilenförmigen Beleuchtung**

(30) Priorität: 18.04.2006 DE 102006017912
(71) Anmelder: Chromasens GmbH, 78467 Konstanz (DE)
(72) Erfinder: Allweier, Arnold, 78476 Allensbach (DE)
(74) Vertreter: Ganahl, Bernhard

(57) **Zusammenfassung**

Die Erfindung betrifft ein Beleuchtungssystem (1) zur zeilenförmigen Beleuchtung einer Vorlage. Mit dem erfindungsgemäßen Beleuchtungssystem wird mittels eines oder mehrerer Rückreflektoren (5) Licht einer Lichtquelle (3) aus unterschiedlichen Raumbereichen auf eine Beleuchtungslinie (2) gelenkt. An der Beleuchtungslinie (2) sind Umlenkspiegel (4) angeordnet, die das Licht in einen vorbestimmten Nutzbereich lenken. Hierdurch erhält man eine linienförmige Lichtquelle, mit im Nutzbereich erhöhter Leuchtdichte, mit der ein Licht mit weiteren optischen Abbildungselementen auf eine zu beleuchtende Zeile abbildbar ist.

## Beschreibung

Die Erfindung betrifft ein Beleuchtungssystem zur zeilenförmigen Beleuchtung.

Eine typische Anwendung für ein Beleuchtungssystem zur zeilenförmigen Beleuchtung ist ein Bildaufnahmesystem bzw. Scanner, bei dem ein Sensor, beispielsweise eine Kamera, grafische Elemente einer Vorlage erfasst, diese grafischen Elemente digitalisiert und die Bilddaten weiter verarbeitet werden. Die Qualität eines Bildaufnahmesystems hängt direkt von der Lichtmenge ab, die dem Sensor bei der Abtastung zur Erzeugung der entsprechenden Signale zur Verfügung steht. Es ist daher wünschenswert, insbesondere im Bereich schneller Zeilen-Abtastsysteme, eine große Lichtmenge zur Verfügung zu stellen, da hierdurch für die nachfolgende Signalverarbeitung ein hoher Signal-Rausch-Abstand bereitgestellt wird.

In der DE 10 2004 025 699 A1 ist ein Fahrzeugscheinwerfer beschrieben der als Lichtquelle eine Leuchtdiode aufweist. Dieser Fahrzeugscheinwerfer ist mit einem Hauptreflektor versehen, der ein Großteil des von der Leuchtdiode emittierten Lichtes nach vorne in Fahrtrichtung reflektiert. Die Leuchtdiode ist mit Ihrer Hauptstrahlrichtung nach oben und etwas nach hinten in Richtung zum Hauptreflektor angeordnet. Ein Teil des abgestrahlten Lichtes wird mittels eines am oberen Rand des Hauptreflektors vorgesehenen Umlenkreflektor nach unten zu einem Zusatzreflektor abgelenkt, der das Licht wiederum nach vorne in Fahrrichtung ablenkt. Durch diese Reflektoranordnung soll der Bauraum dieses Fahrzeugscheinwerfers in Fahrrichtung möglichst kurz gehalten werden.

Aus der JP 56-106257 A geht eine Beleuchtungseinrichtung für eine Kopiervorrichtung hervor, die eine in einem elliptischen Reflektor angeordnete Lichtquelle aufweist. Weiterhin sind noch ein ebenflächiger und ein weiterer elliptischer Reflektor vorgesehen. Alle drei Reflektoren sind derart angeordnet, dass sie das von der Lichtquelle abgestrahlte Licht auf eine gemeinsame Zeile lenken.

Aus der DE 101 08 075 A1 bzw. der korrespondierenden US 2004/0075047 A1 geht ein Beleuchtungssystem zum Beleuchten einer Zeile hervor, welches als Lichtquelle mehrere Leuchtdioden aufweist, wobei deren Licht mittels eines oder mehrerer elliptischer Spiegel auf die zu beleuchtende Zeile abgebildet wird. Die Leuchtdioden sowie die zu beleuchtende Zeile sind jeweils an einem der beiden Brennlinien der elliptischen Spiegel angeordnet.

Ein solcher elliptischer Spiegel kommt insbesondere dann zur Anwendung, wenn die Lichtquellen mit Abstand zum beleuchteten Objekt bzw. zur beleuchtenden Zeile anzuordnen sind, da mit dem elliptischen Spiegel das abgestrahlte Licht der Lichtquellen auf die zu beleuchtende Zeile gebündelt wird.

Die Verwendung eines derartigen elliptischen Linienreflektors hat jedoch zwei grundsätzliche Probleme.
- Es fallen nur Strahlen aus einem eingeschränkten Winkelbereich, der im Folgenden als Nutzbereich bezeichnet wird, auf den Reflektor und können auf die Zeile abgebildet werden. Lichtstrahlen außerhalb des Nutzbereiches, der im Folgenden als Nebenbereich bezeichnet wird, können somit nicht zur Beleuchtung der Zeile beitragen.
- Die Verwendung eines Linienreflektors stellt ein optisches Abbildungssystem dar, wobei die Lichtquellen auf die Zeile im Verhältnis der Abstände Lichtquelle - Reflektor zu Reflektor - Zeile abgebildet werden. Verkleinert man den Abstand zwischen den Lichtquellen und dem Reflektor, so verbreitert sich der Lichtstreifen an der Zeile. Damit reduziert sich dort die Beleuchtungsstärke, und daraus resultierend die Leuchtdichte.

Ein solches System arbeitet somit umso effizienter, je kleiner der Abbildungsmaßstab und je größer die Breite des Reflektors ist. Der realisierbare Abbildungsmaßstab und die Reflektorgröße werden aber oft durch die vorhandenen Rahmenbedingungen im jeweiligen Gerät begrenzt, so dass eine Erhöhung der Beleuchtungsstärke nur durch eine Erhöhung der Leuchtdichte der Lichtquellen erreicht werden kann.

Die obigen Ausführungen gelten gleichermaßen für die Verwendung einer Stablinse anstelle eines Linienreflektors, mit welcher Licht von mehreren Lichtquellen auf eine Zeile abgebildet wird.

Die oben erläuterten Probleme sind insbesondere von Bedeutung, wenn als Lichtquellen Leuchtdioden verwendet werden, da sie eine relativ geringe Licht-Leistungsdichte im Vergleich zu anderen Lichtquellen, wie zum Beispiel Leuchtstoffröhren, aufweisen. Leuchtdioden werden jedoch in derartigen Beleuchtungssystemen sehr gerne wegen ihrer sehr guten Eigenschaften im Hinblick auf Lebensdauer, Zeitstabilität, Temperaturstabilität und Effizienz der Lichtausbeute eingesetzt.

Hochleistungsleuchtdioden können nicht beliebig eng nebeneinander platziert werden. Dies führt zu thermischen Problemen, so dass prinzipbedingt die Lichtintensität von einer mehrere Leuchtdioden umfassenden Anordnung begrenzt ist.

Der Erfindung liegt deshalb die Aufgabe zugrunde, ein Beleuchtungssystem zur zeilenförmigen Beleuchtung zu schaffen, mit welchem eine höhere Lichtintensität im Nutzbereich erzielt werden kann, ohne dass die Leuchtdichte der einzelnen Lichtquellen erhöht werden muss.

Die Erfindung wird durch ein Beleuchtungssystem mit den Merkmalen des Anspruchs 1 gelöst. Vorteilhafte Ausgestaltungen der Erfindung sind in den Unteransprüchen angegeben.

Das erfindungsgemäße Beleuchtungssystem zur zeilenförmigen Beleuchtung umfasst zumindest eine Lichtquelle, welche ein Lichtstrahlbündel über einen vorbestimmten Winkelbereich aussendet, der einen Nutzbereich und einen Nebenbereich umfasst. Der Nutzbereich ist mittels eines Abbildungselementes auf eine zu beleuchtende Zeile abbildbar und der Nebenbereich umfasst den Bereich außerhalb des Nutzbereichs.

Das erfindungsgemäße Beleuchtungssystem zeichnet sich durch einen Rückreflektor aus, der mit Abstand zur Lichtquelle im Nebenbereich derart angeordnet ist, dass er einen Teil des von der Lichtquelle ausgesandten Lichtes auf eine Beleuchtungslinie lenkt, auf der die Lichtquelle angeordnet ist, und auf der mehrere Umlenkspiegel vorgesehen sind, die das durch den Rückreflektor auf sie gelenkte Licht in den Nutzbereich lenken.

Hierdurch wird Licht aus dem Nebenbereich in den Nutzbereich abgelenkt, wodurch auch Licht, das ursprünglich im Nebenbereich von der Lichtquelle abgestrahlt worden ist, zur Beleuchtung der Zeile verwendet wird. Dies führt zu einer intensiven Ausleuchtung der Zeile, ohne dass hierzu eine Erhöhung der Lichtleistung der Lichtquelle(n) notwendig ist.

Vorzugsweise weist das Beleuchtungssystem mehrere Lichtquellen auf, die an der Beleuchtungslinie angeordnet sind, wobei zwischen zwei benachbarten Lichtquellen zumindest ein Linienreflektor angeordnet ist. In einem solchen Beleuchtungssystem können auch bei Verwendung von Leuchtdioden als Lichtquellen eine hohe Lichtintensität der Ausleuchtung der Zeile erreicht werden.

Bei einer weiteren Ausführungsform der Erfindung wird lediglich eine einzige oder werden einige wenige Lichtquellen verwendet. Benachbart zu einer jeden Lichtquelle sind mehrere Umlenkspiegel angeordnet und einer jeden Lichtquelle sind mehrere Rückreflektoren zugeordnet, die jeweils ein Lichtstrahlenbündel der jeweiligen Lichtquelle auf einen der Umlenkspiegel lenken. Als Lichtquellen werden hierbei vorzugsweise Lichtquellen verwendet, die in einen großen Raumbereich, von zum Beispiel mindestens 180°, Licht abstrahlen, wie zum Beispiel Halogenstiftlampen. Hierdurch wird Licht einer punktförmig in den Raumbereich abstrahlende Lichtquelle auf die Beleuchtungslinie gelenkt. Mit den Rückreflektoren und den Umlenkspiegel wird somit eine punktförmig in einen großen Raumbereich abstrahlende Lichtquelle in eine linienförmige in einen relativ engen Nutzbereich abstrahlende Lichtquelle umgesetzt.

Die Rückreflektoren sind vorzugsweise als Segmente eines Ellipsoids ausgebildet, wobei in einem Brennpunkt des Ellipsoids eine Lichtquelle in dem anderen Brennpunkt ein Linienreflektor angeordnet sind. Hierdurch wird ein Teil des von der Lichtquelle abgestrahlten Lichtstrahlbündels auf den jeweiligen Linienreflektor fokussiert.

In einer vereinfachten Ausführungsform können jedoch die Rückreflektoren auch als Segmente einer Kugel oder als Rinnen ausgebildet sein.

Die Erfindung wird nachfolgend beispielhaft näher anhand der Zeichnung erläutert. In den Zeichnungen zeigen schematisch in:
- Fig. 1: ein erfindungsgemäßes Beleuchtungssystem mit kugelsegmentförmigen Rückreflektoren und mehreren Leuchtdioden in der Draufsicht,
- Fig. 2: das Beleuchtungssystem aus Fig. 1 in einer Seitenansicht, und
- Fig. 3: ein weiteres erfindungsgemäßes Beleuchtungssystem in einer Seitenansicht.

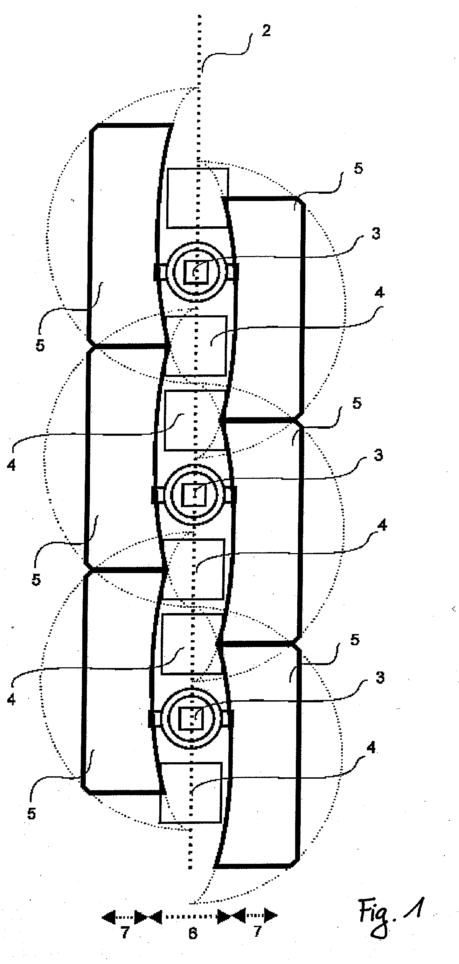

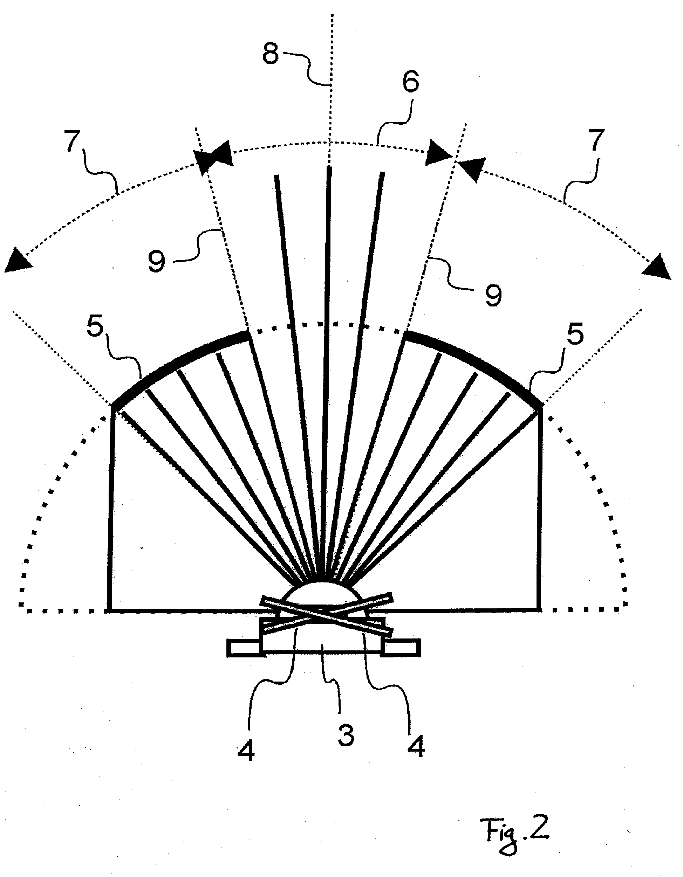

Ein erstes Ausführungsbeispiel eines erfindungsgemäßen Beleuchtungssystems ist in Figuren 1 und 2 dargestellt. Es sind lediglich die für die Funktion der Erfindung wesentlichen Elemente gezeigt. Es ist selbstverständlich, dass geeignete Halterungen vorgesehen sind, die die einzelnen Elemente im Raum fixieren.

Das erfindungsgemäße Beleuchtungssystem 1 nach dem ersten Ausführungsbeispiel umfasst mehrere auf einer Beleuchtungslinie 2 angeordnete Lichtquellen 3. Zwischen zwei benachbarten Lichtquellen 3 sind jeweils zwei plane Umlenkspiegel 4 auf der Beleuchtungslinie 2 angeordnet. Mit Abstand zu den Lichtquellen 3 sind Rückreflektoren 5 vorgesehen, die derart angeordnet sind, dass sie jeweils ein Teil des von einer Lichtquelle ausgestrahlten Lichtstrahlbündels auf einen Linienreflektor 4 umlenken. Die Rückreflektoren 5 sind Kugelsegmente, die in der Draufsicht (Figur 1) etwa langgestreckt streifenförmig ausgebildet sind. Der Mittelpunkt der Kugelsegmente ist auf der Beleuchtungslinie zwischen einer der Lichtquellen 3 und einem hierzu benachbarten Linienreflektor 4 angeordnet, so dass Licht von der Lichtquelle 3 auf den Linienreflektor 4 gelenkt wird.

Die Lichtquellen 3 sind derart ausgerichtet, dass sie Licht in einen Nutzbereich 6 und in seitlich angrenzende Nebenbereiche 7 abstrahlen (Figur 2). Im vorliegenden Ausführungsbeispiel umfasst ein Nutzbereich einen Winkelbereich von 30°, wobei der Scheitelpunkt des Winkelbereiches auf der Beleuchtungslinie 2 liegt. Der Nutzbereich 6 wird durch die in den Nebenbereichen 7 angeordneten Rückreflektoren 5 begrenzt.

Die Umlenkspiegel 4 sind derart gekippt angeordnet, dass das von den Rückreflektoren 5 auf die Umlenkspiegel 4 gelenkte Licht in den Nutzbereich 6 gelenkt wird. Die Symmetrieachsen 9 der Umlenkspiegel verlaufen etwa in der Grenzfläche zwischen dem jeweiligen Nebenbereich 7 und dem Nutzbereich 6.

Im vorliegenden Ausführungsbeispiel wird somit von jeder Lichtquelle 3 ein Teil des Lichtstrahlbündels unmittelbar in den Nutzbereich 6 abgestrahlt und zwei weitere Teile des Lichtstrahlbündels über jeweils einen der Rückreflektoren 5 und einen der Umlenkspiegel 4 aus den Nebenbereichen 7 in den Nutzbereich 6 umgelenkt und ausgehend von der Beleuchtungslinie 2 in den Nutzbereich 6 abgestrahlt.

Besitzt die Lichtquelle eine kosinusförmige Abstrahlcharakteristik, wie sie für Leuchtdioden typisch ist, und umfasst der Nutzbereich einen Winkelbereich von 30°, so werden etwa 26% des emittierten Lichtes direkt in den Nutzbereich 6 gestrahlt. Je 22% der emittierten Strahlung werden über jeweils einen Rückreflektor 5, der sich über einen Winkelbereich von 30° erstreckt und den jeweiligen Linienreflektor 4 in den Nutzbereich 6 gelenkt. Werden Reflektoren mit einer Effizienz von 90% verwendet, dann erhöht sich die im Nutzbereich abgestrahlte Lichtmenge um den Faktor 2,5.

Da das erfindungsgemäße Beleuchtungssystem die im Nutzbereich abgestrahlte Lichtmenge signifikant erhöht, ist sie besonders für die Verwendung von Leuchtdioden geeignet, deren Lichtleistung begrenzt ist.

Die Rückreflektoren 5 können jeweils auch als Segmente eines Ellipsoids ausgebildet sein, wobei dann zweckmäßigerweise ein Brennpunkt auf der Lichtquelle und der andere Brennpunkt auf dem jeweiligen Linienreflektor angeordnet ist. Hierdurch wird das Licht der Lichtquelle auf den jeweiligen Linienreflektor fokussiert. Bei dieser Ausführungsform werden die Verluste gegenüber kugelsegmentförmigen Rückreflektoren geringfügig verringert, da die kugelsegmentförmigen Rückreflektoren die Abbildung der Leuchtflächen der Lichtquellen auf den Umlenkspiegel etwas verschmieren. Dies kann jedoch auch erwünscht sein, da hierdurch eine gleichmäßigere Ausleuchtung entlang der Beleuchtungslinie erhalten wird.

In einer vereinfachten Ausführungsform der Erfindung werden anstatt kugelsegmentförmigen bzw. ellipsoidförmigen Rückreflektoren Rückreflektoren verwendet, die die Form eines Rohrsegmentes bzw. einer Rinne mit kreisförmigen Querschnitt aufweisen. Derartige Rückreflektoren sind sehr einfach und günstig herstellbar. Die Leuchtflächen der Lichtquellen werden jedoch als Streifen über einen längeren Bereich der Beleuchtungslinie abgebildet. Dabei kann ein erheblicher Teil auch zurück auf die Lichtquellen fallen. Hier können keine Reflektoren zur Umlenkung der Strahlen angeordnet werden, weshalb dieser Lichtanteil verloren geht. Weiterhin können sich die von den Rückreflektoren auf die Beleuchtungslinie gelenkten Lichtstrahlbündel der beiden Nebenbereiche 7 überlappen, was bei ebenflächigen Umlenkspiegel zu dem Nachteil führt, dass im Überlappungsbereich nur Licht eines der beiden Nebenbereiche in den Nutzbereich gelenkt werden kann. Hier kann es deshalb zweckmäßig sein, anstelle von ebenflächigen Umlenkspiegel rinnenförmige oder anders geformte Umlenkspiegel zu verwenden, die sich möglichst nahe bis zu den benachbarten Lichtquellen erstrecken. Plane Umlenkspiegel werden jedoch bevorzugt.

Das vom erfindungsgemäßen Beleuchtungssystem im Nutzbereich abgestrahlte Licht kann herkömmlicherweise mittels eines Abbildungselementes auf eine Zeile abgebildet werden. Geeignete Abbildungselemente sind zum Beispiel elliptische Rinnenreflektoren oder Stablinsen. Je nach den räumlichen Möglichkeiten, die für dieses Abbildungselement zur Verfügung stehen, kann der Nutzbereich entsprechend abgeändert werden. Im Rahmen der Erfindung kann ein Nutzbereich mit einem Winkelbereich von 15° bis 45° sinnvoll sein.

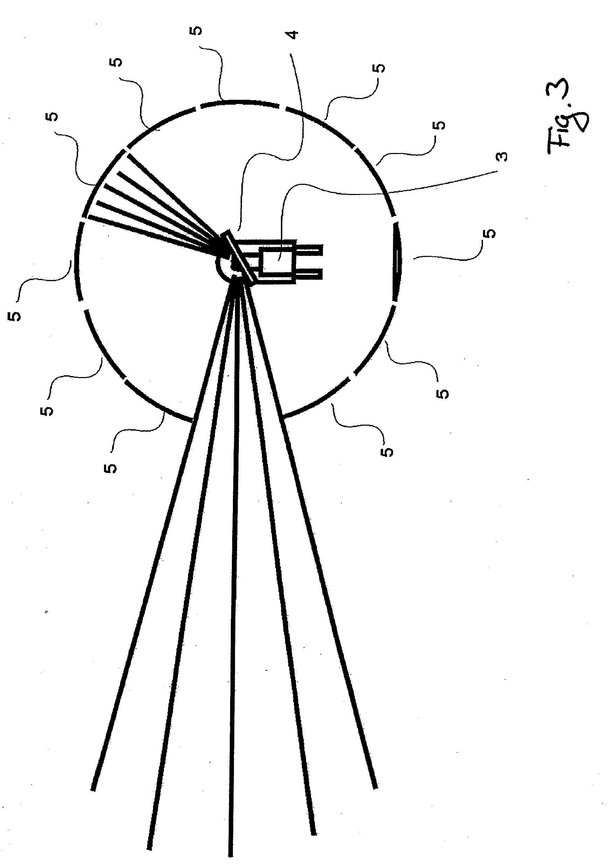

Ein zweites Ausführungsbeispiel der Erfindung (Figur 3) weist lediglich eine einzige Lichtquelle 3 auf. Die Lichtquelle 3 ist eine Halogenstiftlampe, die in praktisch alle Raumrichtungen abstrahlt. Die Lichtquelle 3 ist zusammen mit mehreren Umlenkspiegel 4 auf einer Beleuchtungslinie angeordnet. Die Beleuchtungslinie steht senkrechte zur Darstellung in Figur 3. Zur einfachen bildlichen Darstellung ist in Figur 3 lediglich ein einziger Linienreflektor 4 gezeigt. Es sind jedoch beiderseits von der Lichtquelle 3 mehrere Umlenkspiegel 4 vorgesehen. Die Lichtquelle 3 ist von mehreren Rückreflektoren 5 umgeben. Die Rückreflektoren sind derart angeordnet, dass sie jeweils einen Teil des von der Lichtquelle 3 ausgesandten Lichtstrahlbündels auf jeweils einen Linienreflektor lenken. Die Umlenkspiegel 4 sind derart angeordnet, dass das von den Rückreflektoren 5 auf sie gelenkte Licht in einen gemeinsamen Nutzbereich 6 gelenkt wird. Hierdurch wird Licht der Punktlichtquelle entlang der Beleuchtungslinie verteilt und von dort in Nutzbereich 6 abgestrahlt. Die in den fast alle Raumrichtung abstrahlende Punktlichtquelle wird somit in eine lediglich in den Nutzbereich 6 abstrahlende linienförmige Lichtquelle umgesetzt.

Die Rückreflektoren 5 können wiederum in der Form von Kugelsegmenten ausgebildet sein, wobei der Mittelpunkt des jeweiligen Kugelsegments auf der Beleuchtungslinie zwischen der Lichtquelle 3 und dem jeweiligen Linienreflektor 4 angeordnet ist, auf den der Rückreflektor 5 das Licht der Lichtquelle lenken soll.

Bei der Ausbildung der Rückreflektoren 5 als Ellipsoidsegmente ist ein Brennpunkt an der Lichtquelle und der andere Brennpunkt auf dem Linienreflektor angeordnet, auf den das Licht von der Lichtquelle mittels des jeweiligen Rückreflektors gelenkt werden soll.

Bei dem oben erläuterten Ausführungsbeispiel wird Licht einer einzigen Punktlichtquelle auf die Beleuchtungslinie umgelenkt und von dort in den Nutzbereich abgestrahlt. Im Rahmen der Erfindung ist es selbstverständlich auch möglich, dass mehrere Punktlichtquellen vorgesehen werden, denen jeweils eine Vielzahl von Umlenkspiegel zugeordnet sind.

Für beide oben erläuterten Ausführungsbeispiele gilt, dass zur zeilenförmigen Beleuchtung weniger Lichtquellen notwendig sind, um die gleiche Lichtintensität wie bei herkömmlichen Beleuchtungssystemen zu erhalten. Hierdurch werden die durch die Abwärme der Lichtquellen hervorgerufenen thermischen Probleme verringert. Andererseits ist es möglich, mit der gleichen Anzahl von Lichtquellen im Vergleich zu herkömmlichen Beleuchtungssystemen eine höhere Lichtintensität zu erzielen.

Die Erfindung ist insbesondere zur Verwendung von Leuchtdioden als Lichtquellen geeignet, da Leuchtdioden einfach in einer linienförmigen Anordnung angeordnet werden können. Bei Leuchtdioden, insbesondere bei Hochleistungsleuchtdioden, ist jedoch zu berücksichtigen, dass aufgrund der thermischen Probleme die Leuchtdioden nicht beliebig eng nebeneinander angeordnet werden können. In den Zwischenbereichen zwischen zwei benachbarten Leuchtdioden können jedoch die keine Wärme verursachenden Umlenkspiegel einfach angeordnet werden.

Die Erfindung kann folgendermaßen kurz zusammengefasst werden:

Die Erfindung betrifft ein Beleuchtungssystem zur zeilenförmigen Beleuchtung einer Vorlage. Mit dem erfindungsgemäßen Beleuchtungssystem wird mittels eines oder mehrerer Rückreflektoren Licht einer Lichtquelle aus unterschiedlichen Raumbereichen auf eine Beleuchtungslinie gelenkt. An der Beleuchtungslinie sind Umlenkspiegel angeordnet, die das Licht in einen vorbestimmten Nutzbereich lenken. Hierdurch erhält man eine linienförmige Lichtquelle, mit im Nutzbereich erhöhter Leuchtdichte, mit der ein Licht mit weiteren optischen Abbildungselementen auf eine zu beleuchtende Zeile abbildbar ist.

### Bezugszeichenliste

- 1: Beleuchtungssystem
- 2: Beleuchtungslinie
- 3: Lichtquelle
- 4: Linienreflektor
- 5: Rückreflektor
- 6: Nutzbereich
- 7: Nebenbereich
- 8: Symmetrieebene des Nutzbereiches
- 9: Symmetrieachse der Umlenkspiegel

## Patentansprüche

1. Beleuchtungssystem zur zeilenförmigen Beleuchtung, umfassend
- zumindest eine Lichtquelle (3), welche ein Lichtstrahlbündel über einen vorbestimmten Winkelbereich aussendet, der einen Nutzbereich (6) und einen Nebenbereich (7) umfasst, wobei der Nutzbereich (6) mittels eines Abbildungselementes auf eine zu beleuchtende Zeile abbildbar ist und der Nebenbereich (7) den Bereich außerhalb des Nutzbereichs (6) umfasst,
- zumindest einen Rückreflektor (5), der mit Abstand zur Lichtquelle (3) im Nebenbereich (6) derart angeordnet ist, dass er einen Teil des von der Lichtquelle (3) ausgesandten Lichtes auf eine Beleuchtungslinie (2) lenkt, auf der die Lichtquelle (3) angeordnet ist, und
- mehrere Umlenkspiegel (4), die an der Beleuchtungslinie (2) derart angeordnet sind, dass das vom Rückreflektor (5) auf sie gelenkte Licht in den Nutzbereich (7) gelenkt wird.

2. Beleuchtungssystem nach Anspruch 1,
**dadurch gekennzeichnet,**
**dass** der Nutzbereich (7) einen Winkelbereich von 15° bis 45° umfasst, wobei der Scheitelpunkt des Winkelbereichs auf der Beleuchtungslinie (2) liegt.

3. Beleuchtungssystem nach Anspruch 1 oder 2,
**dadurch gekennzeichnet,**
**dass** das Beleuchtungssystem mehrere Rückreflektoren (5) aufweist.

4. Beleuchtungssystem nach einem der Ansprüche 1 bis 3,
**dadurch gekennzeichnet,**
**dass** angrenzend an beiden Seiten des Nutzbereichs (6) Rückreflektoren (5) angeordnet sind.

5. Beleuchtungssystem nach einem der Ansprüche 1 bis 4,
**dadurch gekennzeichnet,**
**dass** es mehrere Lichtquellen (3) umfasst, die an der Beleuchtungslinie (2) angeordnet sind, wobei zwischen zwei benachbarten Lichtquellen (3) zumindest ein Linienreflektor (4) angeordnet ist.

6. Beleuchtungssystem nach einem der Ansprüche 1 bis 5,
**dadurch gekennzeichnet,**
**dass** die Lichtquellen (3) Leuchtdioden sind.

7. Beleuchtungssystem nach einem der Ansprüche 1 bis 4,
**dadurch gekennzeichnet,**
**dass** es eine einzige oder einige wenige Lichtquellen (3) aufweist, wobei benachbart zu einer jeden Lichtquelle (3) mehrere Umlenkspiegel (4) vorgesehen sind, und einer jeden Lichtquelle (4) mehrere Rückreflektoren (5) zugeordnet sind, die jeweils ein Lichtstrahlenbündel der jeweiligen Lichtquelle (3) auf einen der Umlenkspiegel (4) lenken.

8. Beleuchtungssystem nach Anspruch 7,
**dadurch gekennzeichnet,**
**dass** die Lichtquelle (3) eine in einen Raumbereich von zumindest 180° und vorzugsweise in fast den gesamten Raumbereich strahlende Lichtquelle (3), wie z.B. eine Halogenstiftlampe, ist.

9. Beleuchtungssystem nach einem der Ansprüche 1 bis 8,
**dadurch gekennzeichnet,**
**dass** die Rückreflektoren (5) das von der Lichtquelle (3) stammende Lichtstrahlbündel etwa auf die Beleuchtungslinie (2) fokussieren.

10. Beleuchtungssystem nach einem der Ansprüche 1 bis 9,
**dadurch gekennzeichnet,**
**dass** die Rückreflektoren (5) rinnenförmig ausgebildet sind.

11. Beleuchtungssystem nach einem der Ansprüche 1 bis 9,
**dadurch gekennzeichnet,**
**dass** die Rückreflektoren (5) die Form eines Segmentes eines Ellipsoids aufweisen.

12. Beleuchtungssystem nach Anspruch 11,
**dadurch gekennzeichnet,**
**dass** einer der Brennpunkte des Ellipsoids auf einer der Lichtquellen (3) und der andere Brennpunkt auf einem der korrespondierenden Umlenkspiegel (4) angeordnet ist.

13. Beleuchtungssystem nach einem der Ansprüche 1 bis 9,
**dadurch gekennzeichnet,**
**dass** die Rückreflektoren (5) die Form eines Segmentes einer Kugel aufweisen.

14. Beleuchtungssystem nach Anspruch 13,
**dadurch gekennzeichnet,**
**dass** der Mittelpunkt des kugelsegmentförmigen Rückreflektors (5) auf der Beleuchtungslinie etwa mittig zwischen einer der Lichtquellen (3) und einem der korrespondierenden Umlenkspiegel (4) angeordnet ist.

15. Beleuchtungssystem nach einem der Ansprüche 1 bis 14,
**dadurch gekennzeichnet,**
**dass** die Umlenkspiegel (4) ebenflächige Reflektoren sind, die gegenüber einer Symmetrieebene (8) des Nutzbereiches (6) etwas gekippt angeordnet sind.

16. Beleuchtungssystem nach einem der Ansprüche 1 bis 14,
**dadurch gekennzeichnet,**
**dass** die Umlenkspiegel rinnenförmig ausgebildet sind.

17. Beleuchtungssystem nach einem der Ansprüche 1 bis 16,
**dadurch gekennzeichnet,**
**dass** das Beleuchtungssystem ein optisches Abbildungselement zum Abbilden des im Nutzbereich abgestrahlten Lichtstrahlbündels auf eine Zeile aufweist.

18. Beleuchtungssystem nach Anspruch 17,
**dadurch gekennzeichnet,**
**dass** das optische Abbildungselement ein elliptischer Linienreflektor oder eine Stablinse ist.
